# EUROPEAN PATENT APPLICATION

(11) **EP 1 631 016 A1**
(43) Date of publication of application: **01.03.2006**
(21) Application number: 04425636.0
(22) Date of filing: 27.08.2004
(51) Int. Cl.: H04L 12/56

(54) **Method to hold on a RCC connection inside a third generation Radio Access Network when the UE capability doesn't match with the DCH reconfiguration state**

(71) Applicant: Siemens Mobile Communications S.p.A., 20126 Milano (IT)
(72) Inventor: Fumagalli, Sergio, 20069 Vaprio D'Adda (IT); Morini, Massimilliano, 27040 Castelleto (IT)

(57) **Abstract**

A method is described to hold on RRC connections established between a Radio Network Controller (RNC) belonging to a third generation PLMN and some former *Type a* and *Type b* User Equipments (UEs) which do not support at least one Uplink/Downlink (UL/DL) downgraded bitrate among the ones normally triggered by the RNC during a reconfiguration of the Dedicated Channel (DCH) state. These former UEs are of the following types:
*Type a : AMR* + *PS0*/*0kbps not supported and AMR* + *PS8*/*8kbps not supported*;
*Type b: AMR* + *PS0*/*0kbps supported and AMR* + *PS8*/*8kbps not supported*.
These old *Type a* and *Type b* are detectable among the other UEs because of it is possible associate to each one of them a respective unique subset of radio access capability parameters with assigned values. The two unique subset are acting as characteristic signatures. During an initial step (F0) the two subset are stored by the network into the system configuration database. In order to avoid drop of a connection due to unacceptable DCH reconfiguration is triggered, the UTRAN reads (F4) the radio access capability parameter combinations and values contained in the *RRC CONNECTION SETUP COMPLETE* message from a connected UE under reconfiguration. Then it compares (F4) the readings with the two stored subset in order to detect the presence of *Type a* or *Type b* UE in case a stored subset is included in the read combinations and values. Once either *Type a* or *Type b* UE is detected, UTRAN inhibits (F5, F6) the triggering of a DCH state reconfiguration towards an UL/DL downgraded bitrate which is not supported by the detected type of former UE (fig.6).

## Description

### FIELD OF THE INVENTION

The present invention relates to the field of mobile radio communications networks and more precisely to a method to hold on a RRC (Radio Resource Control) connection inside a third generation PLMN (Public Land Mobile Network) when the UE (User Equipment) capability doesn't match with the DCH (Dedicated Channel) reconfiguration state. Without limitation, the invention is applicable in 3^{rd} generation 3GPP (3rd Generation Partnership Project) PLMNs and in any UMTS (Universal Mobile Telecommunications System) networks with RRC protocol connections similar to the 3GPP standard ones. Depending on the adopted standard, either Frequency Division Duplexing (FDD) or Time Division Duplexing (TDD) are possible. Non-limiting 3GPP system suitable to accommodate the invention are for example the following:
- WCDMA (Wideband Code Division Multiple Access) UTRA-FDD (Universal Terrestrial Radio Access) 3.84 Mcps (Mega chips);
- 3GPP UTRA-TDD 3.84 Mcps;
- 3GPP UTRA-TDD 1.28 Mcps; and
- TD-SCDMA (Time Division - Synchronous CDMA) 1.28 Mcps standardised by CWTS committee (Chinese Wireless Telecommunication Standards).

### BACKGROUND TO THE INVENTION

3GPP group issued a complete set of continuously updated Technical Specifications (TS) for the standardisation of the UMTS network. With particular reference to the present invention the following two are pointed out:
- **TS 25.331** V3.a.0 (Release 1999) titled: "Radio Resource Control (RRC) Protocol Specification"; and
- **TS 25.926** V3.2.0 (Release 1999) titled: "UE Radio Access Capabilities".

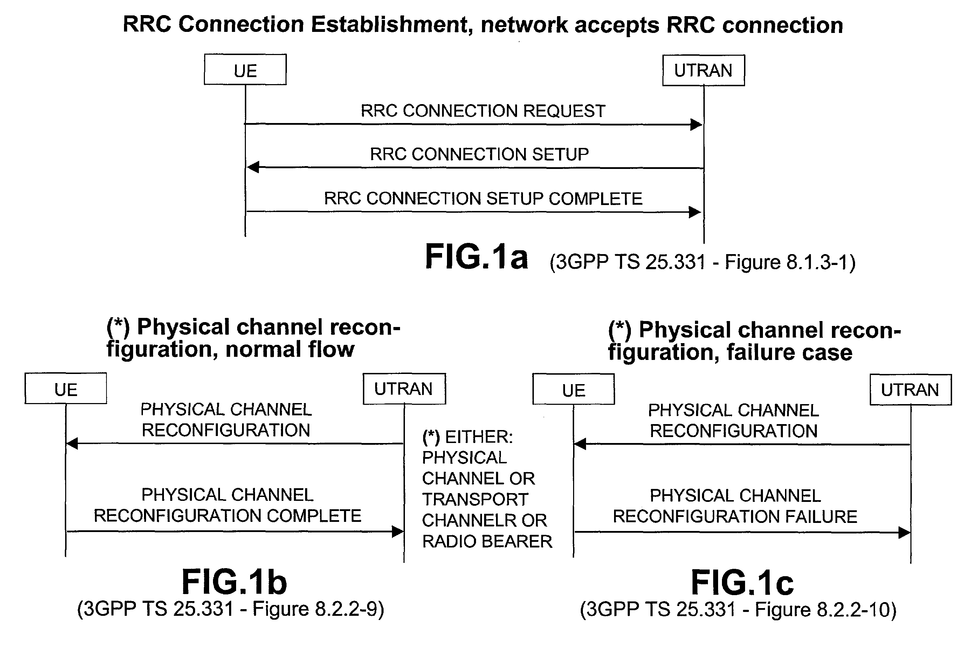

**Figures 1a, 1b,** and **1c** show as many simplified message sequence charts in accordance with **TS 25.331** which allow to introduce the technical problem arising with the prior art. **Fig.1a** (see fig.8.1.3-1) represents a RRC Connection Establishment procedure in the specific case of acceptance of the RRC connection by the network. With reference to **fig.1a** and section 8.1.3 titled "Initiation", the UE shall initiate the procedure when upper layers in the UE request the establishment of a signalling connection and the UE is in idle mode (no RRC connection exists). Upon initiation of the procedure, the UE shall performs some operations specified in the paragraph 8.1.3.2, then it sends a *RRC CONNECTION REQUEST* message to the UTRAN. The message content includes the initialisation value of the following variable: *ESTABLISHMENT_CAUSE, INITIAL_UE_IDENTITY, PROTOCOL_ERROR _INDICATOR.* Upon receiving the RRC *CONNECTION REQUEST* message, UTRAN accepts the request and sends to the UE an *RRC CONNECTION SETUP* message including a predefined or default radio configuration or alternatively the complete set of RB (Radio Bearer), TrCH (Transparent Channel), and PhyCH (Physical Channel) information elements to be used. Upon reception of the *RRC CONNECTION SETUP* message, the UE shall performs the operations listed in the paragraph 8.1.3.6, then it sends an *RRC CONNECTION SETUP COMPLETE* message to the UTRAN including the information mentioned in the paragraph 8.1.3.6. Among other things the UE shall:
- retrieve its UTRA UE radio access capability information elements from variable UE_CAPABILITY_REQUESTED; and then
- include this in IE (Information Element) "UE radio access capability" and IE "UE radio access capability extension", provided this IE is included in variable UE_CAPABILITY_REQUESTED;
- retrieve its inter-RAT-specific UE radio access capability information elements from variable UE_CAPABILITY_REQUESTED; and then
- include this in IE "UE system specific capability".

Concerned to the UE radio access capabilities and their usage, **TS 25.926** includes some interesting resuming tables. The following tables are provided:
- Table 5.2.1.1: UE radio access capability parameter combinations, parameters common for UL (Uplink) and DL (Downlink).
- Table 5.2.2.1: UE radio access capability parameter combinations, DL parameters.
- Table 5.2.3.1: UE radio access capability parameter combinations, UL parameters.
- Table 6.1: Reference RABs.
- Table 6.2: Example mappings between capability combinations and RAB combinations.
   In all the above Tables the UE Radio Access capability parameters are grouped for classes of the UE bitrate; the following classes are foreseen: 32, 64, 128, 384, 768, and 2048 kbps. The main exemplary capability parameters in Table 5.2.1.1 are: PDCP (Packet Data Convergence Protocol) parameters; RLC (Radio Link Control) parameters (e.g.: Total RLC AM buffer size (kBytes) and Maximum number of AM (Acknowledge Mode) entities; Multi-mode related parameters (e.g.: Support of UTRA FDD/TDD); Multi-RAT (Radio Access Technology) related parameters (e.g.: Support of GSM, Support of multicarrier); Location Services (LCS) related parameters (e.g.: Standalone location method(s) supported); RF parameters for FDD (e.g.: UE power class, Tx/Rx frequency separation); RF parameters for TDD (e.g.. Radio frequency bands, Chip rate capability, UE power class). The main exemplary capability parameters in Table 5.2.2.1 and 5.2.3.1 are: RLC channel parameters, Physical channel parameters (FDD), and Physical channel parameters (TDD). The RAB characteristics and mapping to DCH in Table 6.1 are grouped from letter A to G by the following Quality of Service (QoS) classes: Conversational speech, Streaming max. 57.6 kbps, Interactive/Background max. 32 to 2048 kbps.

Once the RRC connection is established as said for the interaction scheme of **fig.1a,** due to various causes, the need could arise to change one or more parameters specified for one or more original connections. For example, in order to satisfy incoming requests of resources by the UEs during peaks of data traffic, the UTRAN might downgrade the quality of some connections. The same behaviour might be enforced by UTRAN in order to increase the probability of accepting a call assignment request by the UE. Downgrade the quality is performed by reconfiguring the connection towards lower bitrates. For this aim UTRAN may initially reconfigure the DCH state to a bitrate of 8 kbps both in uplink an downlink channel, then the bitrate may be zeroed but the resources kept reserved for a given time. Operatively, the Radio Network Controller (RNC) triggers the reconfiguration to DCH state at 8/8 kbps and to DCH state at 0/0 kbps, with all mobiles types; as a matter of fact, in that case, RNC does not take into account information about UE capabilities. In this situation the mobile not able to manage the DCH state at 8/8 kbps and the DCH state at 0/0 kbps will drop the connection. On the other hand the UE is not tied by 3GPP specifications to comply with 8/8 kbps and 0/0 kbps because said specifications only declare the maximum bitrate the UE shall comply with. Presently some former UEs exist which don't bear those downgraded DCH states. These special UEs certainly comply with one or more of the standardized maximum bitrates grouped as previously said, so that they enter the initial RRC connected mode, but in case of successive reconfiguration towards said downgraded DCH states the connection is dropped. The drawback is further complicated by the fact that at the present state of 3GPP specifications the minimum bitrates are not mandatory, as instead the highest ones, and those special UEs are not immediately detectable by means of specifically related Identifiers.

**Fig.1b** and **1c,** show the Physical channel reconfiguration procedure in either normal flow or failure case. Other than Physical channel, the reconfiguration procedure may concerns Transport Channel or Radio Bearer, indifferently. For the aim of the invention all the reconfiguration opportunities are referred to DCH (Dedicated Channel), remembering that DCCH (Dedicated Control Channel) and, if configured, DTCH (Dedicated Traffic Channel) are available in the CELL_DCH state. Besides, the UE and UTRAN shall select the signalling radio bearers for RRC messages using RLC-TM (Transparent Mode), RLC-UM (Unacknowledged Mode) or RLC-AM (Acknowledged Mode) on the DCCH and CCCH (Common Control Channel) available in the CELL_DCH state.

With reference to **fig.1b** (see TS 25.331: figure 8.2.2.-9) the simplified message sequence chart is started by a *PHYSICAL CHANNEL RECONFIGURATION* message directed from UTRAN to the UE. This message is used by UTRAN to assign, replace or release a set of physical channels used by an UE. According to paragraph 10.2.22, the content of this message includes the new Information Elements the UE shall agree with. In particular, a reconfiguration towards downgraded AMR (Adaptive MultiRate) of 8/8 kbps and 0/0 kbps are set up. When the physical channel reconfiguration has been done the UE sends to the UTRAN the message *PHYSICAL CHANNEL RECONFIGURATION COMPLETE* according to paragraph 10.2.23. The good end of the reconfiguration procedure clearly means that the involved UEs are able to manage the DCH AMR state at 8/8 kbps and 0/0 kbps.

With reference to **fig.1c** (see TS 25.331: figure 8.2.2.-10) the simplified message sequence chart is started as in the preceding figure and the *PHYSICAL CHANNEL RECONFIGURATION* message content is set in the same manner. Contrarily to the case of the preceding figure, in this case some old UEs are present in RRC connected mode inside the Service Area which don't bear one or both the downgraded DCH states. These special UEs are of the following types:
*Type a: AMR + PS0*/*0kbps not supported and AMR + PS8*/*8kbps not supported;*
*Type b: AMR + PS0*/*0kbps supported and AMR + PS8*/*8kbps not supported.*

Sign "+" means that the UE is delivering a double service, namely: normal Adaptive Multirate Voice call service contemporarily to a packet service; for example, for Web browsing during voice call (opportunity offered by the only UMTS technology). PS8/8kbps means that the Packet Service is delivered at 8 kbps in UL/DL. PS0/0kbps means that the resources for Packet Service are still set up before a given time is elapsed but no data transfer is accepted.

Because of in the case of **fig.1c** the configuration given by UTRAN is unacceptable, these special UEs send back a *PHYSICAL CHANNEL RECONFIGURATION FAILURE* message whose content is set according to paragraph 10.2.24. Due to reconfiguration failure said UEs will drop the respective connections. In such a case just the opposite result with respect to the original aim of extending the probability of accepting new call assignment requests is obtained.

### OBJECT OF THE INVENTION

The main object of the present invention is that to overcome the drawbacks of the prior art and indicate a method able to hold on a RRC connection inside a third generation PLMN when the UE capability doesn't match with the DCH reconfiguration state.

### SUMMARY AND ADVANTAGES OF THE INVENTION

The invention achieves said object by providing a method to hold on an RRC connection inside a third generation PLMN, as disclosed in the claims.

According to the method of the invention, the inventors have realized that some former UEs catalogued as Type a and Type b in the introductory part are detectable among the other UEs by the examination of the UE radio access capability parameter combinations included in the content of the *RRC CONNECTION SETUP COMPLETE* message from the UE. The checked parameters concern: RLC capability, Transport channel capability, and Physical channel capability. The two subset of UE radio access capability Information Elements characteristic of Type a and Type b UEs, are similar to signatures among all the foreseeable IE combinations and values. All UEs except for Type a and Type b shall have radio access capability IE combinations and values different from the two signatures.

Operatively, UTRAN stores the two IE signatures relevant to Type a and Type UEs in the system configuration database. UTRAN, before downgrading the DCH state, compares the UE radio access capability parameter combinations included in the content of the *RRC CONNECTION SETUP COMPLETE* message from the UE with the stored IE signatures. Whether a coincidence is detected, UTRAN does not allocate the downgraded DCH state relevant to the detected signature. In this situation the UE not able to manage the downgraded DCH state at 8/8 kbps (either for single data service or plus AMR voice call) or the preceding downgraded state plus DCH state at 0/0 kbps, will not drop the connection. Whether a coincidence is not detected UTRAN freely allocates the downgraded DCH states.

The advantage of the invention is to make UTRAN aware on the existence of said former types of UEs, so as to regulate its behaviour in order to avoid drops of the RRC connections during the attempt to face traffic peaks or increase the probability of accepting a call assignment request. The method of the invention is completely transparent to the UEs so that their firmware is unchanged.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **figures 1a, 1b,** and **1c** shows three simplified message sequence charts relevant to RRC connection/reconfiguration in accordance with **TS 25.331;**
- **fig.2** shows an example of UMTS network Service Area;
- **fig.3** shows a functional block representation of the UMTS system;
- **fig.4** shows the general protocol model of UTRAN specification;
- **fig.5** shows the Radio Interface protocol model of UTRAN specification;
- **fig.6** shows a hybrid representation (message sequence charts including a flow chart) of the method according to the present invention.

### DETAILED DESCRIPTION OF AN EMBODIMENT OF THE INVENTION

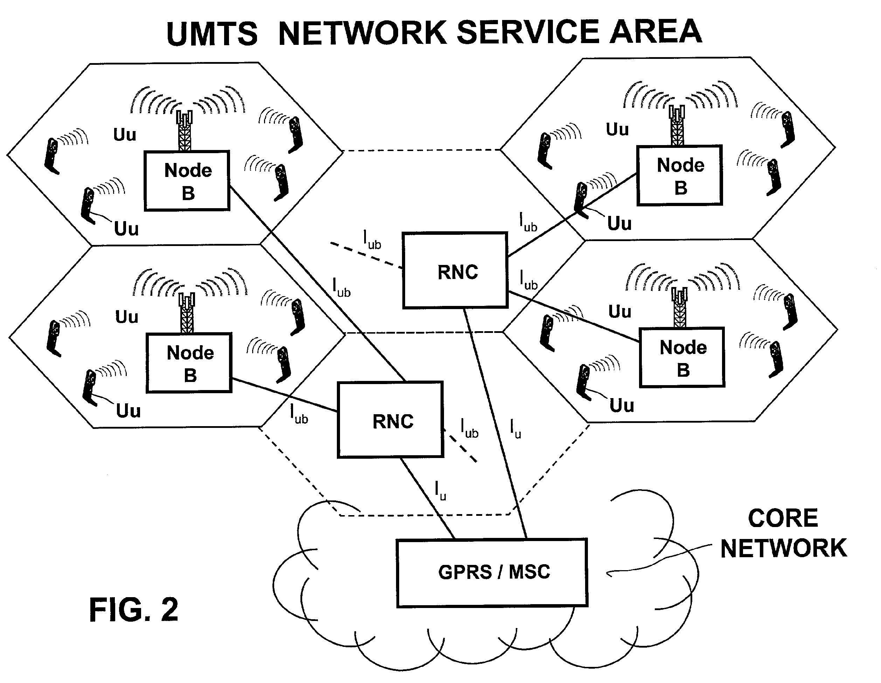

With reference to **fig.2** we see a partial UMTS network deployed on a territory subdivided into contiguous service cells, each corresponding to the radio coverage area of a fixed base station, conventionally named Node B, placed at the centre or in corner position. Each Node B is connected via radio with a plurality of UEs. A cluster of contiguous fixed base stations is physically connected to a RNC, in its turn connected to the Core Network CN. The latter is schematically represented by a block SGSN / MSC (Serving GPRS Support Node / Message Switching Centre) for indicating either packet switching or circuit switching capability. The Core Network CN is shared between UMTS and the existing GSM (Global System for Mobile communications). The following interfaces are defined: lu interface between the core network and RNCs; lub interface between RNC and controlled Nodes B; and Uu on-air interface between Node B and the UEs in the covered cell. The UMTS network is subdivided into contiguous service areas, each including several cells. Mobile terminals in idle state are traceable into a service area by paging messages broadcast from the bases stations.

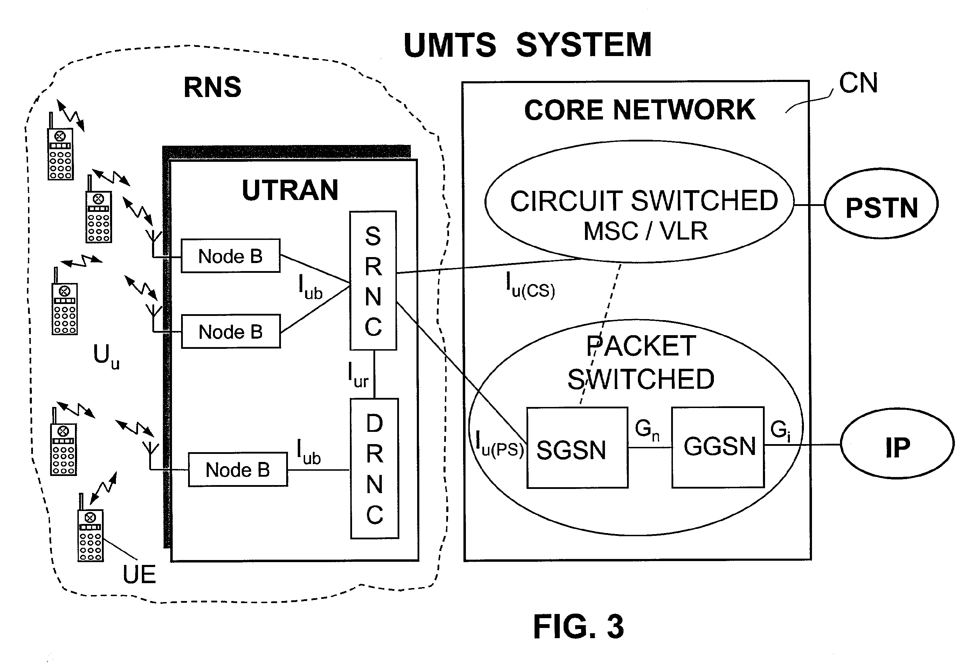

With reference to **fig.3**, the UMTS system includes the Core Network CN, (see TS 23.002) connected to the mobile UEs through the interposed UTRAN (see TS 25.401). UTRAN includes a plurality of Node B blocks and the respective RNC controllers, and all the involved interfaces. Each UE includes a Mobile Equipment (ME) with a respective USIM card (UMTS Subscriber Identity Module). Inside the UTRAN the upper RNC is a SRNC (Serving RNC) connected to the Core Network CN by means of a first lu(CS) Circuits Switched (CS) interface and a second lu(PS) Packet Switched (PS) interface. The RNC placed below is a DRNC (Drift RNC) connected to the SRNC by means of an internal lur interface. Each RNC controlling cells is named CRNC and is interfaced to the other type of RNCs through the lur interface. The UTRAN and the served UEs constitute a Radio Network Subsystem (RNS) disclosed in TS 23.110. The core network CN includes a CIRCUIT SWITCHED part and a PACKET SWITCHED part. The first one is connected to the PSTN (Public Switched Telephone Network) while the second one is connected to the IP (Internet Protocol) network. The circuit switched part includes the MSC / VLR (Visitor Location Register) network elements which together allow wandering of users inside the territory covered by the network. The packet switched part includes two network elements known as SGSN (Serving GPRS Support Node) and GGSN (Gateway GPRS Support Node). The first one is interfaced to the MSC / VLR and to the HLR (Home Location Register) to catch location information of the UEs in the packet switched domain. The SRNC is interfaced to the MSC/VLR block through the lu(CS) interface and to the SGSN node through the lu(PS) interface. The SGSN node is further interfaced to the GGSN node through the Gn interface. The GGSN node is further interfaced to the IP network through the Gi interface.

As the operation is concerned, on the Uu radio interface the transmissions are based on the CDMA technique. The CDMA technique implies that multiple signals can be transmitted in the same time interval and in the same frequency band, but separated in the code domain. Depending on the adopted standard, the CDMA transmissions can be further based on TDMA (Time Division Multiple Access) technique. The TDMA technique implies that each frame is subdivided in a fixed number of timeslots, each of them conveys one or more CDMA bursts, and different timeslots of the frame can be assigned to different users or alternatively to pilots or signalling channels.

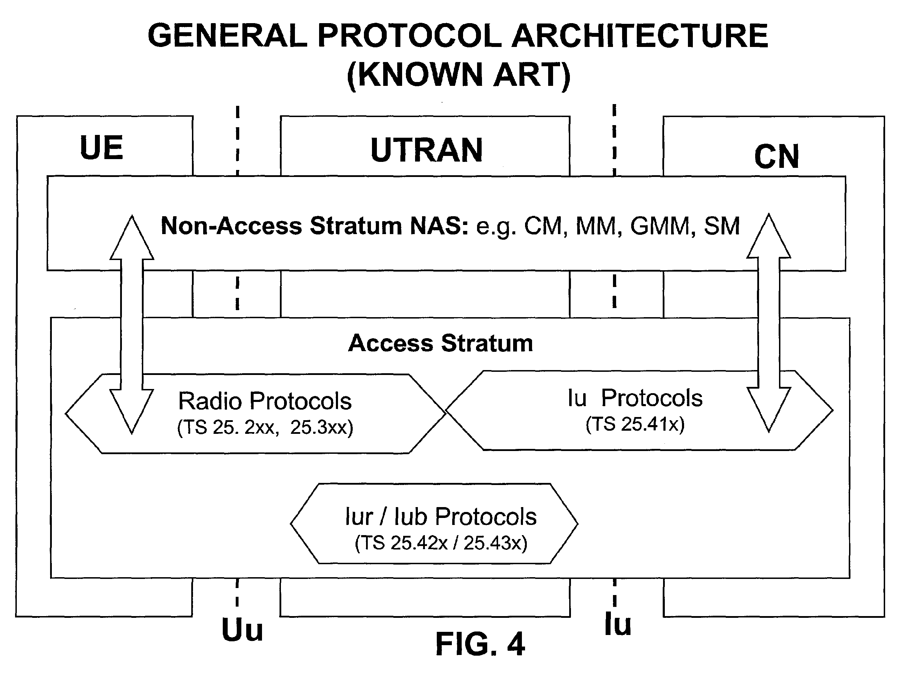

**Fig.4** shows diagrammatically the general protocol architecture of the signalling used in the UMTS network. For this aim the network is subdivided into the UE, UTRAN and CN parts delimited by the Uu and lu interfaces (but also lur and lub). An Access Stratum with a superimposed Non-Access Stratum (NAS) are lie down on the depicted architecture. The Access Stratum includes the lur / lub protocols defined in TS 25.42x / TS 25.43x, the lu protocols defined in TS 25.41x, and the Radio protocols defined in TS 25.2xx and 25.3xx. User data and control information are exchanged between the CN and the UEs using the Radio protocols and the lu protocols of the Access Stratum. These protocols contain mechanisms for transfer NAS message transparently, i.e. the so-called Direct Transfer (DT) procedures. The NAS stratum includes higher levels protocols to handle control aspects, such as: Connection Management (CM), Mobility Management (MM), GPRS Mobility Management (GMM), Session Management (SM), Short Message Service (SMS), etc.

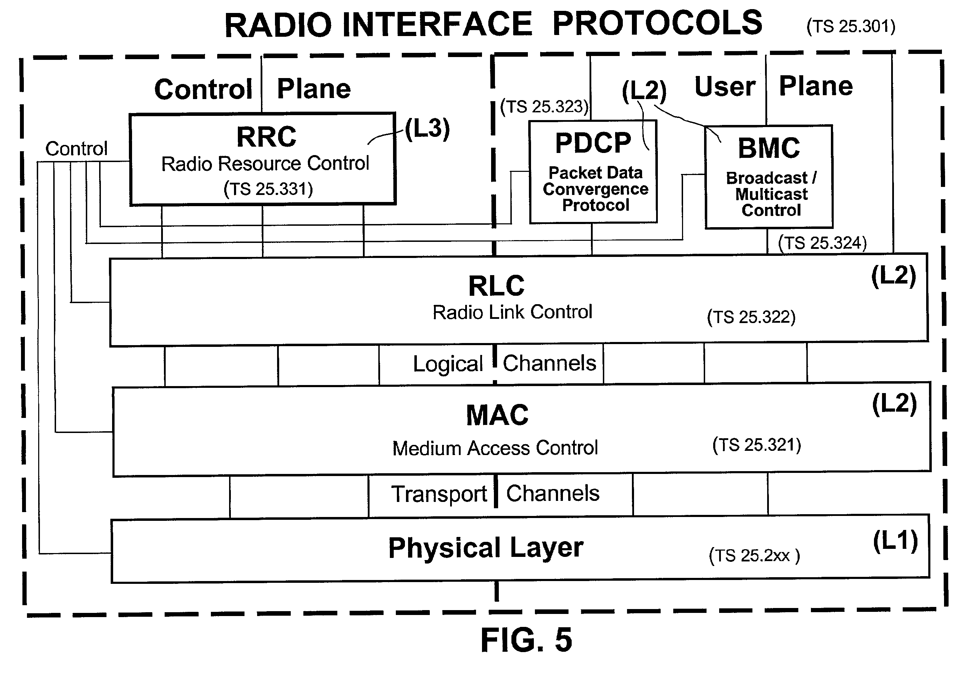

**Fig.5** shows the general architecture of the Radio Interface Protocols according to TS 25.301. With reference to **fig.5**, starting from the bottom of the protocol stack we see the following superimposed layers: Physical Layer (Level 1), MAC (Medium Access Control at Level 2), and RLC (Level 2) entering both the Control Plane and User Plane. Superimposed to the RLC layer, the Control Plane includes the RRC protocol al Level 3, while the User Plane includes PDCP (Packet Data Convergence Protocol) and BMC (Broadcast / Multicast Control) protocols both at Level 2. Some control lines depart from RRC block to reach all the existing blocks. Two-way transport Channels exist between Physical Layer and MAC layer. Two-way Logical Channels exist between MAC and RLC layers. Other logical channels exist between RRC, PDCP, BMC and the RLC layer.

The Physical Layer of Um interface is described in the TS 25.2xx series. The UTRA FDD and TDD modes could be used for physical transmission. The Physical layer offers information transfer to MAC and higher sub-layers via Transport Channels mapped on Physical Channels characterised by frequency and code in the UTRAN FDD mode and by frequency, code, and timeslot in the UTRAN TDD mode. Main Transport Channels are: Random Access Channel (RACH), Forward Access Channel (FACH), Broadcast Channel (BCH), Paging Channel (PCH), Dedicated Cannel (DCH). Other important Layer 1 functions are: Encoding / De-coding, Interleaving / De-interleaving, Forward Error Correction (FEC), Rate matching, Spreading / De-spreading, QPSK Modulation / De-modulation, RF processing, Closed Loop Power Control, Error Detection, Measurement of power and quality parameters of the reception signal, etc.

The MAC protocol is described in TS 25.321. It is responsible for e.g.: mapping of Logical Channel to Transport Channel and vice versa; switching between Common and Dedicated Transport Channel on RRC (Radio Resource Control) decision; selection of Transport Format for each Transport Channel; ciphering of RT data; UE identification on Common Transport Channels, etc.

The RLC protocol is described in TS 25.322. It is responsible for e.g.: Segmentation / Re-Assembly the higher layer PDUs (Protocol Data Unit) into/from smaller RLC Payload Units (PU); transfer of user data in Acknowledged / Unacknowledged mode; Flow Control to provide different Quality of Service (QoS) levels; Backward Error Correction (BEC) for NRT data; Ciphering for RT data, etc.

The PDCP protocol is described in TS 25.323. It is used only in the User Plane for Packet Switched (PS) domain services. The central PDCP function is (de-) compression of redundant network PDU control information. This may include TCP/IP header (de-) compression.

The BMC protocol is described in TS 25.324. It is existing only in the User Plane for e.g.: providing broadcast or multicast transmission service on the radio interface for common user data in transparent or unacknowledged mode; storage and scheduling of BMC messages such as SMS messages for transmission to the UEs.

The RRC is described in **TS 25.331.** The exchange of control data between the UE and UTRAN is handled via RRC. Important RRC functions are:
- Broadcasting of NAS System Information (SI) provided by the Core Network as well as cell specific AS system information. The information are normally repeated on a regular basis. RRC is responsible for scheduling, segmentation and repetition of the information.
- Paging & Notification. RRC is responsible to page or notify certain UEs.
- Handling of Radio Bearer. RRC layer is able to establish, reconfigure and release Radio Bearer in the User Plane.
- Handling of Radio Resources. RRC handles the assignment, reconfiguration and release of radio resources (e.g.: Codes, CPCH (Common Packet Channel)) channels needed for the RRC connection.
- RRC Connection Mobility functions. This function is used to keep track of the location while the UE is connected with UTRAN. It performs the evaluation, decision and execution of Hard and Soft handovers, performs Cell URA (User Registration Area) update, and any more.
- UE measurement reporting & control. RRC controls the UE measurement, i.e. what to measure, when to measure and when to report. It performs also the reporting of the measurements from the UE to the S-RNC.
- Quality of Service control, to ensure that the requested QoS for the Radio Bearers can be met.
- Outer Loop Power Control, i.e. to control the setting of the Closed Loop Power Control target.
- Control of Ciphering, to provide procedures for setting of ciphering between the UE and the S-RNC.

Two basic modes of RRC connectivity are existing: "RRC Idle" and "RRC Connected". In the RRC Idle mode no UE location information are stored in UTRAN (UE identified by NAS identifier, e.g.: IMSI, TMSI, P-TMSI). No exchange of signalling information is possible because an RRC connection shall be established before. Exit the RRC Idle mode can only be initiated by the UE with a request for an RRC connection. The transition can be triggered by the network with a paging message.

In the RRC connected mode UTRAN stores UE location information and assigns an RNTI (Radio Network Temporary Identity) to the UE. A signalling connection between the UE and UTRAN exists. Four different States exist in the RRC Connected mode:
- Cell_DCH: a DCH is allocated to the UE and the UE location is known in the S-RNC on cell of active level. Handovers are used to track the movement of the UE. The S-RNC can decide to change from Cell_DCH to Cell_FACH state due to low activity.
- Cell_FACH: no dedicated resources are allocated to the UE. Common channel (FACH, RACH, CPCH) are used for transmitting signalling messages and small amounts of user data. The UE location is known at cell level. If there is higher load, a transition to Cell_DCH is performed. If there is no activity, a transit to Cell_PCH (Paging Channel) is possible.
- Cell_PCH: the UE is still known at cell level. Cell Updates are performed but the UEs can only be reached via Paging. Discontinuous Reception (DRX) is activated.
- URA_PCH: the UE is known at URA level. Only URA updates are performed to reduce the Uu signalling load.

Now some RRC Control Plane procedures are summarized. The exemplary procedures are: RRC Connection Setup, RRC Connection Release, and Paging, remembering that the Physical Channel Reconfiguration procedure for either normal flow or failure have been already described with reference to **fig.1b** and **fig.1c.** The description of the RRC Connection Setup (Establishment) procedure integrates the arguments introduced with reference to **fig.1a**.

RRC Connection Setup: an RRC Connection is necessary for the exchange of signalling information between the UE and RNC. It is always requested by the UE with an *RRC Connection Request* message on the RACH channel. This message directly includes a unique UE identity and the Establishment Cause (e.g.: Originating Call, Terminating Call, Emergency Call, Detach, SMS). The RNC allocates either Dedicated or Common Channel (DCH or CCH) resources to the UE with the *RRC Connection Setup* message on a FACH channel. So the UE turns over to the CELL_DCH or CELL_FACH state. The UE request can be rejected using the *RRC Connection Reject* message. The UE may be directed to another UTRA carrier or system. In case of receiving the RRC *Connection Setup* message the UE acknowledges with an *RRC Connection Setup Complete* message.

RRC Connection Release: the UE RRC Connection, including the signalling link and all radio bearers, is released with the *RRC Connection Release* message from the RNC. It is acknowledged by the UE with *RRC Connection Release Complete.* The UE turns back from Cell_DCH or Cell_FACH state to the RRC Idle Mode.

Paging is an RRC message transmitted from RNC to the selected UEs in a cell for the following reasons:
- The UE is in RRC Idle Mode and there is a Mobile Terminating Call (MTC) or Session Setup for the UE. The Core Network requests the RNC to page the UE.
- The UE is in RRC Connected Mode Cell_PCH or URA_PCH Mode. For e.g. DL packet data transmission it should change to Cell_FACH Mode.
- System information have been updated. The RNC sends a paging message to all the UEs in the cell with the new information.

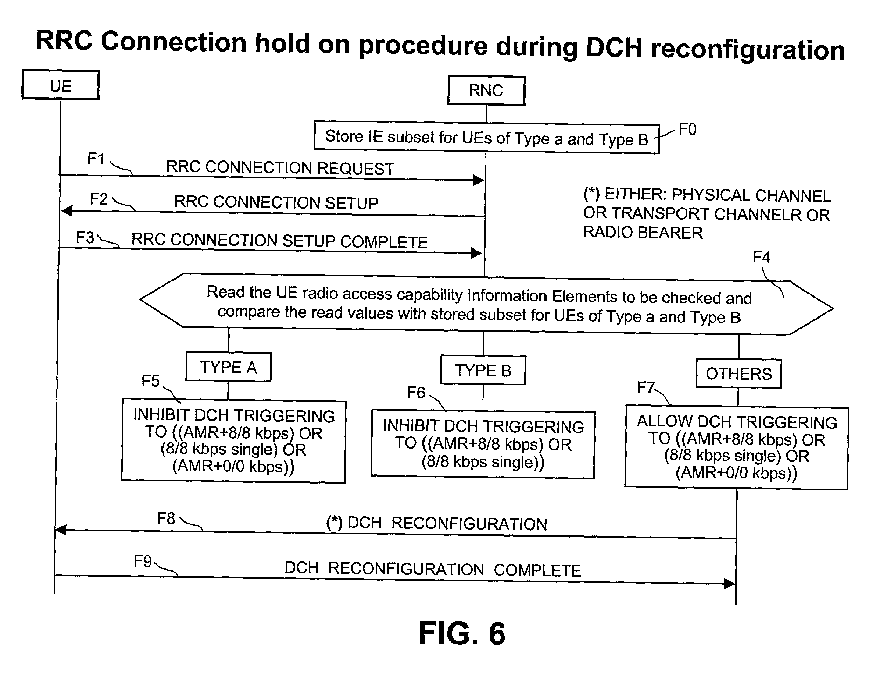

The RRC block of **fig.5** at the RNC side is specialized to carry out the RRC connection hold on procedure of the present invention represented in **fig.6**. With reference to **fig.6**, the procedure is developed by means of exchanging signalling messages between UEs and the RNC inside the UTRAN. The procedure begins with step **F0** executed during an UTRAN initialization phase. During step **F0** the RNC stores in the system database two subset of Radio Access Capability Information Elements concerning: RLC capability, Transport channel capability, and Physical channel capability which are needed to discriminate UEs of *Type a* and *Type b* among other UEs. With reference to **TS 25.331** (10.3.3.42) the following subset is stored for *Type a* UEs characterized by *AMR* + *0*/*0kbps not supported and AMR* + *8*/*8kbps not supported*:

| **Capability Group Name** | **Information Element (IE)** | **IE value** |
|---|---|---|
| RLC Capability (10.3.3.34) | Total_RLC_AM_Buffer_Size | 10 kBytes |
| Transport Channel Capability (10.3.3.40) | UL_Transport_CH_Capability / Turbo_(De-)coding_Supported | 2560 bits |
| Physical Channel Capability (10.3.3.25) | UL_Phys_CH_Capability / Support_of_PCPCH (Physical Common Packet Channel) | TRUE (boolean) |

| **IE value** | **Semantics description** |
|---|---|
| Total_RLC_AM_Buffer_Size (10.3.3.34) | Total receiving and transmitting RLC Acknowledge Mode buffer and MAC reordering buffer capability in kBytes. |
| UL_Transport_CH_Capability / Turbo_(De-)coding_Supported | Maximum sum of number of bits of all turbo coded transport blocks transmitted uplink at an arbitrary time instant. |

Turbo codes are well known in the art, they were introduced by the article of Berrou et al. (1993), titled: "Near Shannon Limit Error-Correcting Coding and Decoding: Turbo Codes"; *Proc. IEEE Int. Conf. Commun.,* pp. 1064-1070, May, Geneva, Switzerland.
The following subset is stored for UEs of *Type b* characterized by
*AMR + 0*/*0kbps not supported and AMR* + *8*/*8kbps not supported*:

| **Capability Group Name** | **Information Element (IE)** | **IE value** |
|---|---|---|
| RLC Capability (10.3.3.34) | Total_RLC_AM_Buffer_Size | 10 kBytes |
| Transport Channel Capability (10.3.3.40) | UL_Transport_CH_Capability / Turbo_(De-)coding_Supported | 2560 bits |
| Physical Channel Capability (10.3.3.25) | UL_Phys_CH_Capability / Support of PCPCH | FALSE (boolean) |

Starting from the UEs in RRC Idle state, the first three steps **F1, F2,** and **F3** correspond to the ones of **fig.1a** for driving the UE in RRC Connected state and setting up the DCH channel. During these steps only UE maximum bitrate information are exchanged. In the successive step **F4** the RNC reads the content of *RRC CONNECTION SETUP COMPLETE* message in order to acquire all the UE radio access capability Information Elements at the respective values. Then it compares the readings with the two subset stored during step **F0** in order to detected the presence of *Type a* or *Type b* UE, in case a respective stored subset is included in the readings. In case the readings are not matching the stored subset the type of UE is classified as *others.* Depending on the type of UE, the RNC performs different actions in the successive steps **F5,** or **F6,** or **F7.** In case step **F5** is entered the RNC inhibits DCH triggering to ((AMR+8/8 kbps) OR (8/8 kbps single) OR (AMR+0/0 kbps)). If step **F6** is entered, the RNC inhibits DCH triggering to ((AMR+8/8 kbps) OR (8/8 kbps single)) but it may assign AMR+PSO/0kbps. If step F7 is entered, the RNC allows DCH triggering to ((AMR+8/8 kbps) OR (8/8 kbps single) OR (AMR+0/0 kbps)). After the execution of the step **F7** the RNC sends in the successive step **F8** a *DCH RECONFIGURATION* message to the UE compliant with the previous step. The UE responds with a *DCH RECONFIGURATION COMPLETE* message stating the good end of the reconfiguration procedure. In any case the RRC connection is held on either with the original setting of the DCH channel, in the case of inhibition step **F5** or **F6**, or with different setting in the case of step **F7**.

## Claims

1. Method to hold on Radio Resource Control (RRC) connections established (F1, F2, F3) between a Radio Network Controller (S-RNC) belonging to a third generation PLMN and some former types (TYPE A, TYPE B) of controlled mobile User Equipments (UE) which do not support at least one Uplink/Downlink downgraded bitrate normally triggered by the network (UTRAN) during reconfiguration (F7) state of a Dedicated Channel, called DCH, **characterized in that**: the network performs the steps of:
- storing (F0) in a system configuration database for each different type of former UE an associated subset of radio access capability parameters and respective assigned values, each subset being unique among all the radio access capability parameter combinations and values assumed by other UEs;
- reading (F4) the radio access capability parameter combinations and values contained in a *RRC CONNECTION SETUP COMPLETE* message from a connected UE and comparing (F4) the readings with all the stored subset, in order to detect the presence of a former type of UE (TYPE A, TYPE B) in case a stored subset is included in the read combinations and values;
- inhibiting (F5, F6) the triggering of a DCH state reconfiguration towards an UL/DL downgraded bitrate which is not supported by the detected type of former UE (TYPE A, TYPE B).

2. The method of claim 1, **characterized in that** said unique combinations of radio access capability parameters and values include RLC capability, Transport channel capability, and Physical channel capability.

3. The method of claim 2, **characterized in that** the UE belonging to a first former type (TYPE A) do not support both:
- Adaptive Multirate voice call service plus contemporary Packet service at 0 kbps in Uplink and Downlink ; and
- Adaptive Multirate voice call service plus contemporary Packet service at 8 kbps in Uplink and Downlink.

4. The method of claim 3, **characterized in that** the stored subset associated to the UE of said first former type (TYPE A) includes the following parameters and values:
| **Capability Group Name** | **Information Element IE** | **IE value** |
|---|---|---|
| RLC Capability | Total_RLC_AM_Buffer_Size | 10 kBytes |
| Transport Channel Capability | UL_Transport_CH_Capability / Turbo_(De-)coding_Supported | 2560 bits |
| Physical Channel Capability | UL_Phys_CH_Capability / Support of PCPCH | TRUE (boolean) |

5. The method of claim 3, **characterized in that** upon an UE belonging to said first former type (TYPE A) is detected, the triggering of a DCH state reconfiguration towards either:
- Adaptive Multirate voice call service plus contemporary Packet service at 0 kbps in Uplink and Downlink; OR
- Adaptive Multirate voice call service plus contemporary Packet service at 8 kbps in Uplink and Downlink; OR
- Single Packet service at 8 kbps in Uplink and Downlink; is inhibited (F5) by the network.

6. The method of claim 2, **characterized in that** the UE belonging to a second former type (TYPE B):
- support Adaptive Multirate voice call service plus contemporary Packet service at 0 kbps in Uplink and Downlink; and
- do not support Adaptive Multirate voice call service plus contemporary Packet service at 8 kbps in Uplink and Downlink.

7. The method of claim 6, **characterized in that** the stored subset associated to the UEs of said second former type (TYPE B) includes the following parameters and values:
| **Capability Group Name** | **Information Element** | **IE value** |
|---|---|---|
| RLC Capability | Total_RLC_AM_Burfer_Size | 10 kBytes |
| Transport Channel Capability | UL_Transport_CH Capability / Turbo_(De-)coding_Supported | 2560 bits |
| Physical Channel Capability | UL_Phys_CH_Capability / Support of PCPCH | FALSE (boolean) |

8. The method of claim 6, **characterized in that** upon an UE belonging to said second former type (TYPE B) is detected, the triggering of a DCH state reconfiguration towards either:
- Adaptive Multirate voice call service plus contemporary Packet service at 8 kbps in Uplink and Downlink; OR
- Single Packet service at 8 kbps in Uplink and Downlink; is inhibited (F6) by the network.

9. The method of claim 1, **characterized in that** in case the presence of a former type UE (TYPE A, TYPE B) is not detected, the network triggers (F7) a reconfiguration state of the Dedicated Channel with a downgraded UL/DL bitrate which is not supported by said UEs of former type (TYPE A, TYPE B).
